# EUROPEAN PATENT SPECIFICATION

(11) **EP 3 912 475 B1**
(45) Date of publication and mention of the grant of the patent: **30.08.2023**
(21) Application number: 21174498.2
(22) Date of filing: 18.05.2021
(51) Int. Cl.: A23G 1/26, A23G 3/02, A23G 7/00, A23G 3/20, B65G 57/30, B65G 59/06, B65G 60/00

(54) **METHOD AND PLANT FOR MOLD ADVANCEMENT, PARTICULARLY FOR MOLDING FOR CONFECTIONERY PRODUCTS**
VERFAHREN UND ANLAGE ZUR FORMFÖRDERUNG, INSBESONDERE ZUM FORMEN VON SÜSSWAREN
PROCEDE ET INSTALLATION POUR L'AVANCEMENT DU MOULE, NOTAMMENT POUR LE MOULAGE DE PRODUITS DE CONFISERIE

(30) Priority: 18.05.2020 IT 202000011434
(43) Date of publication of application: 24.11.2021
(73) Proprietor: Sacmi Packaging & Chocolate S.p.A., 40026 Imola BO (IT)
(72) Inventor: GIARDINI, Giovanni, 40026 IMOLA (BO) (IT); TOMADON, Massimo, 40026 IMOLA (BO) (IT)
(74) Representative: Lovino, Paolo

(56) References cited:
- DE-C- 730 822
- IT-A1- MI20 130 327
- US-A- 3 993 189
- US-A- 4 232 779
- US-A- 4 503 968
- US-A- 4 540 083

## Description

### CROSS-REFERENCE TO RELATED APPLICATIONS

This patent application claims priority from Italian patent application no. 102020000011434 filed on 18/05/2020.

### TECHNICAL FIELD

The present invention relates to a method and to a plant for advancing molds.

In particular, the present invention is applicable advantageously, but not exclusively, in the field of the production of confectionary products, to which the following description will explicitly refer without thereby losing generality.

### BACKGROUND ART

For the forming of confectionary products, generally, it is known to use forming molds, which are advanced in succession towards machinery configured to feed into the molds a dosed product.

For the advancement of the molds, it is known to use advancement plants, in which the opposite side portions of each mold, i.e. those arranged on opposite sides of an advancement path, are placed on relative side sliding surfaces and the molds are advanced in an orderly manner by a conveyor having, for each sliding surface, a respective drag catenary.

Each mold is coupled to both catenaries by means of respective side pins which extend cantilevered from the catenaries and are insertable inside, and extractable from, retention seats obtained in the mentioned side portions of the molds or on mold carrier elements coupled to the molds.

As is further known, the molds have to be periodically checked and cleaned and, in general, treated so as to ensure the surface and shape quality of the products made, and be replaced, for example, at every production change so as to allow the forming of different products.

Therefore, along the advancement path, the known plants comprise a mold replacement station, in which one or more molds to be replaced are picked up from the succession of molds and, in each space left empty by the picked up mold, a treated or new mold is inserted so as not to generate discontinuity in the succession of molds being advanced.

To such purpose, an actuator assembly and/or a cam assembly is provided, which spaces the section of catenary that passes through the replacement station from the supporting surfaces causing the partial decoupling of the pins from the relative retention seats and, in particular, spaces them by a quantity such to be arranged in respective vertical invitation grooves provided on the sides of the mold. Therefore, the molds passing through the replacement station continue to be partially engaged by the pins of the main catenary but they can be lifted. A lifting assembly arranged inside the replacement station lifts in succession the molds to be replaced moving them towards, or inside, an overhanging mold storage.

Still in the replacement station and downstream of the lifting device in the advancement direction of the molds, a mold reinsertion assembly is then provided. Such assembly, operating inversely picks up one mold at a time from a storage of new or treated molds and carries them downwards, placed on the supporting surfaces, so as to center and couple the vertical invitation grooves with/to the pins. The latter are subsequently completely inserted in the aforementioned retention seats bringing the catenary again close to the relative supporting surfaces.

Although used, the known plants have the main drawback of being relatively complex, from a manufacturing point of view, but especially difficult to control both in the lifting steps of the mold, but especially in the reinsertion steps of the mold. More in particular, in the known plants it is relatively difficult to synchronize or to phase together the advancement of the pins and the vertical downward movement of the new or treated molds so as to insert them along the advancement path. In fact, it can occur that, moving downwards, the vertical invitation grooves are not perfectly aligned with the pins to which they have to couple, due to normal margins of error. To this regard, the vertical invitation grooves provided on the molds define a clearance or tolerance for the engagement with the pins translating along the advancement path, when the new or treated molds are lowered onto the supporting surfaces. Lacking an optimal synchronization and alignment between the pins sliding horizontally and the vertical invitation grooves of the molds being lowered downwards, it can occur that these molds do not correctly or completely couple to the catenaries, hence the plant has to be stopped with the imaginable consequences in terms of production failure. On the other hand, it is not possible to increase the width of the vertical invitation grooves, which are dictated by other operating conditions of the plant.

Plants and methods for advancing and replacing molds in a succession of molds are described, for example, in IT MI20 130 327 A1 and in DE 730 822 C. IT MI20 130 327 A1 discloses a mold advancement method the method comprising the steps of advancing an ordered succession of molds along a longitudinal advancement path on a pair of longitudinal horizontal supporting surfaces transversely spaced from each other by advancing each mold by drag pins forming part of a main drag catenary and coupled to said molds, of moving said ordered succession through a mold replacement station arranged along said path inside said mold replacement station, the method comprising the further steps of lifting at least one mold to be replaced from said supporting surfaces and arranging the lifted mold in a mold storage and inserting a further mold in place of the previously lifted mold before progressively re-coupling said molds to said main drag catenary. The document discloses further a mold advancement plant for the advancement of molds, the plant comprising a pair of surfaces for supporting and sliding an ordered succession of molds and arranged on opposite longitudinal sides of a longitudinal advancement path of said ordered succession; a main drag catenary; drag pins of said main drag catenary each suitable for engaging a relative retention seat obtained in a terminal portion of a relative said mold; a mold replacement station of at least one mold to be replaced of said ordered succession of molds and arranged along said longitudinal path and crossed by said succession of molds; a mold storage for storing the molds; lifting means to lift at least one mold to be replaced from said supporting surfaces and introduce the lifted mold into said mold storage; and inserting means for inserting a further mold into the space left empty by the mold lifted by said lifting means.

### DISCLOSURE OF INVENTION

The object of the present invention is to manufacture a mold advancement plant, which allows solving in a simple and cost-effective manner the problems of the known plants described above and, in particular, is constructively simple, safe, easy to control and with high functional efficiency and reliability.

According to the present invention, a mold advancement method is provided, particularly for forming confectionary products, as claimed in claim 1.

The present invention further relates to a mold advancement plant, particularly for forming confectionary products, as claimed in claim 5.

### BRIEF DESCRIPTION OF THE DRAWINGS

The invention will now be described with reference to the accompanying figures, which illustrate a non-limiting example embodiment, wherein:
Figure 1 is a perspective view, with parts removed for clarity, of a preferred embodiment of a plant for advancing molds to a forming machine schematically illustrated, manufactured according to the principles of the present invention;
Figure 2 illustrates, on a greatly enlarged scale, a detail of Figure 1;
Figure 3 is a front view of the plant of Figure 1;
Figure 4 is a section according to line IV-IV of Figure 3;
Figure 5, illustrates, on a greatly enlarged scale, a detail of Figure 4;
Figure 6 is a section according to line VI-VI of Figure 3 with parts removed for clarity;
Figure 7 illustrates, on a greatly enlarged scale, a detail of Figure 1; and
Figure 8 is a partial top view, with parts removed for clarity, of the plant of Figure 3.

### BEST MODE FOR CARRYING OUT THE INVENTION

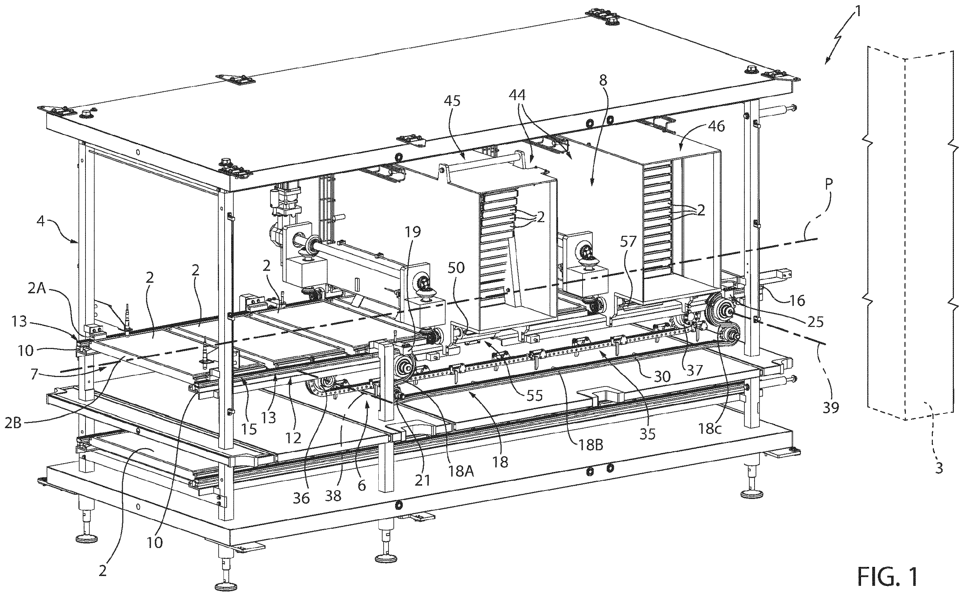

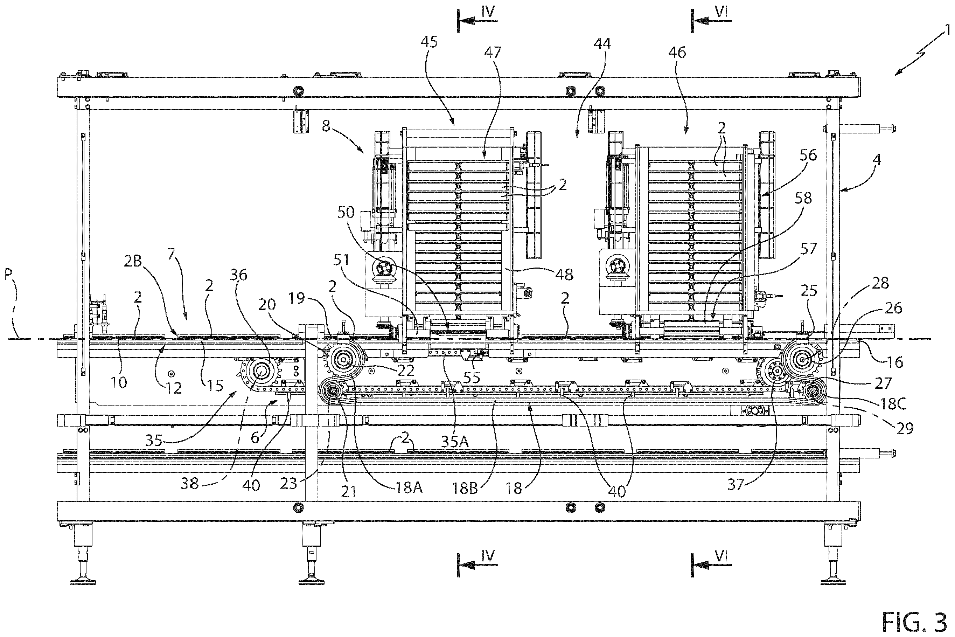

In Figures 1 and 3, reference numeral 1 indicates, as a whole, a plant for feeding forming molds 2 to a forming machine for forming products in mold, in general, and chocolate-based confectionary products, in particular, schematically illustrated and indicated by 3 in Figure 1.

The plant 1 comprises a supporting structure 4 fixed to the floor, and a conveyor 6 for advancing an ordered succession 7 of molds 2 along a longitudinal and rectilinear advancement path P, and through a mold replacement station 8, in which one or more entering molds 2 are each picked up and replaced with another mold 2 identical to or different from the picked up one.

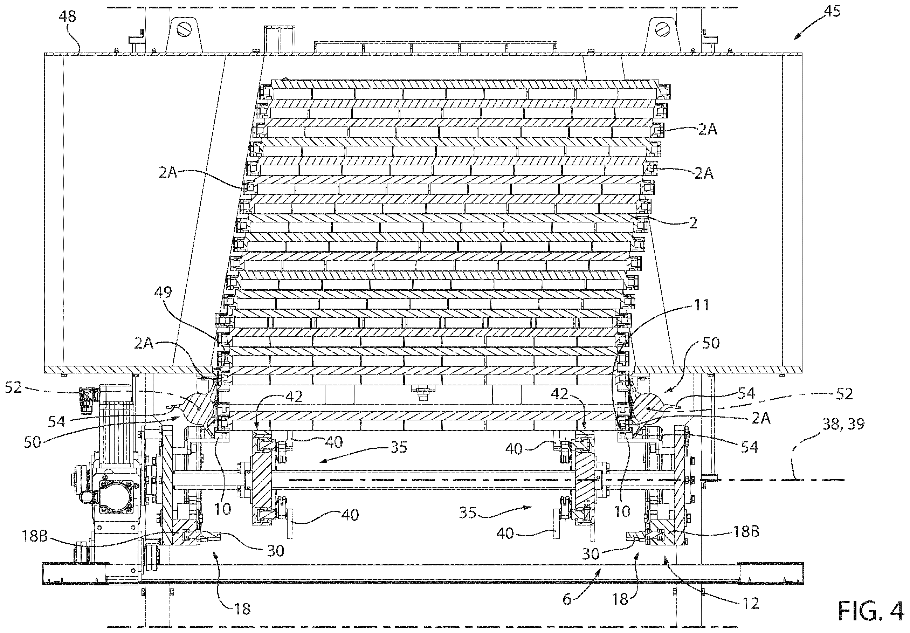

Still with reference to Figures 1 and 3 and to Figure 4, the conveyor 6 comprises a pair of rectilinear guides 10, known per se, which are arranged on opposite sides of the path P in positions parallel to each other and transversely spaced from each other and are firmly connected to the structure 4. Each guide 10 comprises a respective supporting surface 11, on which the bottom surfaces of the opposite end portions 2A of each mold 2 are placed.

The conveyor 4 further comprises a drag catenary 12 of the molds 2 along the path P. The catenary 12 comprises, in turn and for each surface 11, a relative drag chain or belt 13 arranged on the outside of the relative surface 11.

Each chain 13 comprises a rectilinear inlet section 15 into the station 8, a rectilinear outlet section 16 from the station 8 and an intermediate section 18.

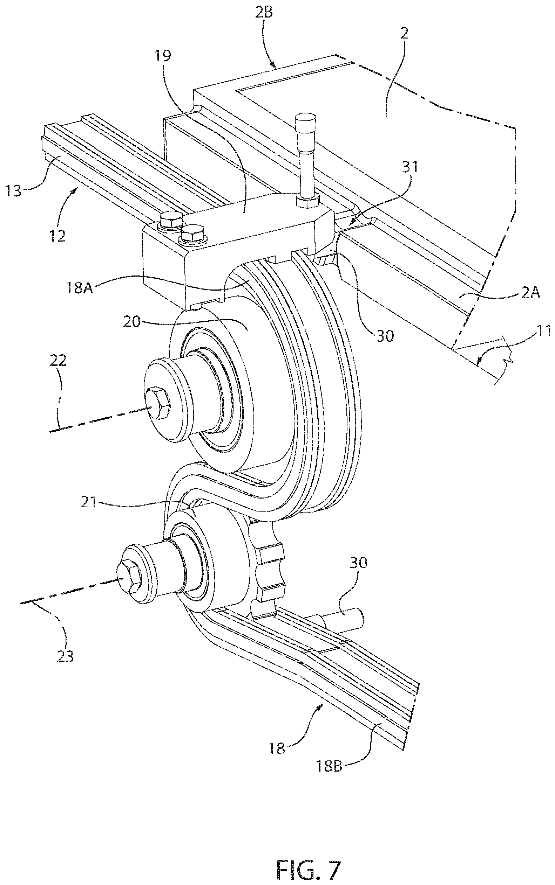

With reference to Figures 1,3 and 7, each intermediate section 18 is shaped and comprises an inlet portion 18A, which is spaced outwards by a relative guide cam 19, known per se, and is S-wound about two wheels 20 and 21 rotatable about respective fixed axes 22 and 23 (Figures 3 and 7), of which the axis 23 is arranged in a lowered position with respect to the axis 22.

Each intermediate section 18 then comprises a rectilinear intermediate portion 18B parallel to the path P and lowered with respect to the relative supporting surface 11. Each intermediate section 18 finally comprises an outlet portion 18C deviated inwards by a guide cam 25, it too known per se and conceptually identical to the cam 19, and S-wound about two return wheels 26 and 27 rotatable about respective axes 28 and 29 parallel to the axes 22 and 23 and arranged at the same distance from the relative surface 11 to which axes 22 and 23 are arranged.

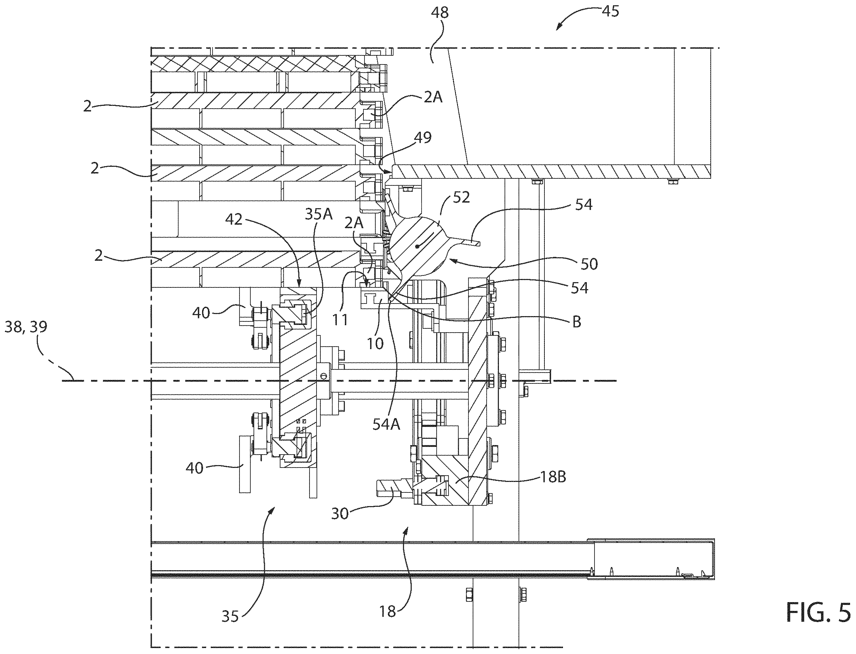

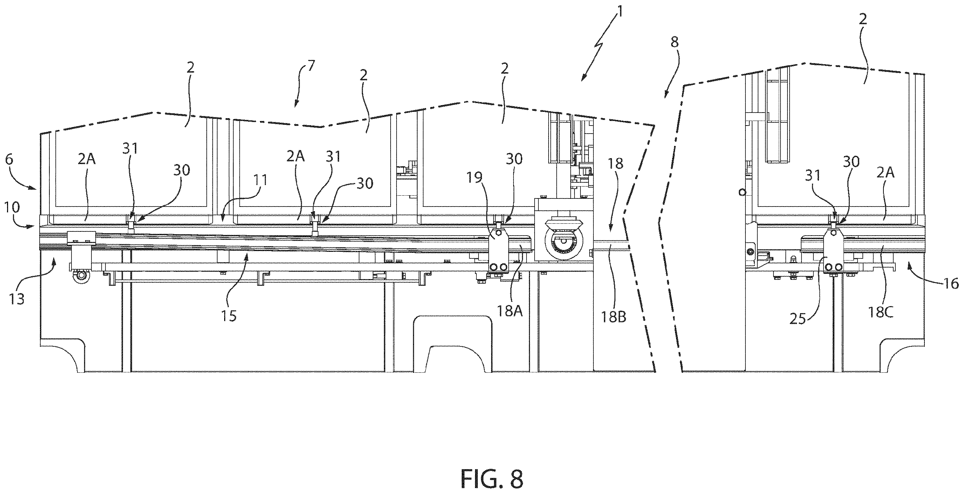

Each chain 13 comprises for each mold 2 a fastening and dragging steg 30, which is parallel to the axes 22 and 23, is firmly connected to the relative chain 13, from which it protrudes towards the relative supporting surface 11 and engages in an axially sliding manner a relative seat 31 obtained in the corresponding side portion 2A (Figure 7) . Each seat 31, known per se, comprises, starting from the side of the relative terminal portion 2A, a vertical countersunk passage and a cylindrical blind hole having an axis parallel to the supporting surfaces 11 and to the axis 22 and a diameter approximating by excess the outer diameter of a free terminal portion of each steg 30. In this manner, in the sections outside of the station 8 (i.e. on the outside with respect to the section defined by the cams 19 and 25), each steg 30 is in a "non-widened" position, is thus inserted in the blind hole of the relative seat 31 and drags the relative mold 2 (Figure 8), while when the catenary 12 passes through the replacement station 8 the relative stegs 30 are lowered and completely extend on the outside of the relative seats 31, as visible in Figures 4 and 5, totally freeing the molds 2 from the constraint with the main catenary 12.

Again with reference to Figures 1, 2, 3, 5 and 6, the conveyor 6 further comprises, for each of the chains 13, an additional drag conveyor 35, independent of the catenary 12 but synchronized with the catenary 12.

Each conveyor 35 comprises, in turn, a chain, which is ring-wound about two return pulleys 36 and 37, one of which motorized, which are rotatable about respective axes 38 and 39 fixed and parallel to the axes 22 and 23 and are arranged upstream of the pulleys 20,21 and, respectively, of the pulleys 26 and 27 in the advancement direction of the succession 7 of molds 2. According to a variant, the pulley 37 is arranged downstream of the pulley 27.

Each chain of the conveyor 35 carries coupled, in a manner known per se, a plurality of fingers 40 provided for pushing the molds 2 along the entire path in which the molds 2 are decoupled from the catenary 12, i.e. in which the stegs 30 are disengaged from the blind holes of the seats 31. The fingers 40 are placed against a back 2B of each mold 2 defining and exerting a mere thrust and without opposing any other constraint to the molds 2.

Again with reference to Figures 3, 5 and 6, each conveyor 35 comprises a delivery branch 35A, which defines a further supporting surface 42 for the molds 2. In the described example, the surfaces 42 are coplanar to the surfaces 11.

Again with reference to Figures 1 and 3, the station 8 houses an assembly 44 for the picking up and the replacement of molds. The picking up and replacement assembly 44 comprises, in the advancement direction of the succession 7, a picking up and storage unit 45 for picking up and storing in succession one or more molds 2 arranged inside the station 8 and a storage and feeding unit 46 for reinserting, in place of each of the picked up molds 2, another mold 2.

Conveniently, the units 45 and 46 are coupled to the structure 4 in a removable or releasable manner so as to allow their replacement rapidly.

Again with reference to Figures 3,4 and 5, the unit 45 comprises a vertical mold storage 47, known per se, and, in turn, comprising a case 48 suitable to receive and hold therein, for example by means of a ratchet device, a stack of molds 2 picked up and delimiting at the bottom a mold inlet 49 facing the supporting surfaces 11 and arranged in proximity of the surfaces. The term "proximity" means that the inlet is raised with respect to the supporting surfaces 11 only by a quantity such to allow the advancement of the molds 2 placed on the surfaces 11 along the path P.

The unit 45 then comprises, for each of the supporting surfaces 11, a respective blade member 50, which is motorized and angularly controlled for picking up in succession the molds 2 placed on the surfaces 11 and/or 42 and for lifting them and inserting them inside the relative storage 47 through the respective inlet 49.

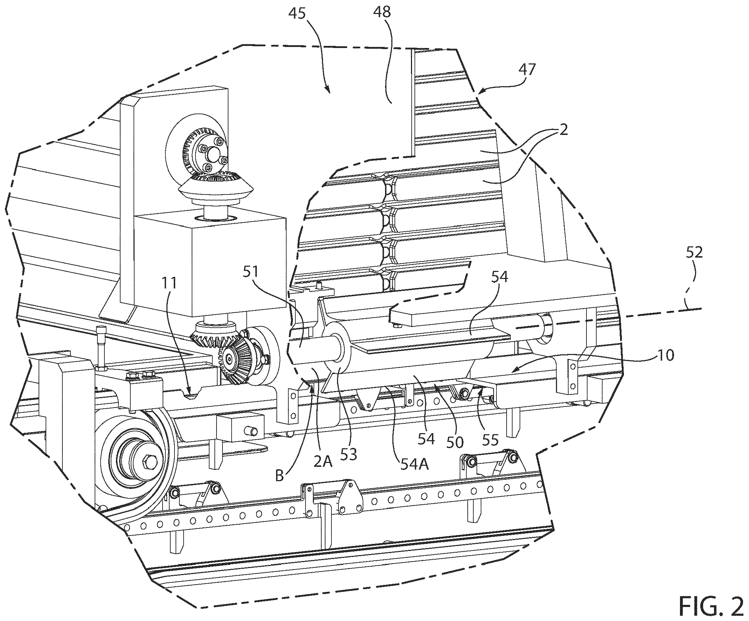

With reference to Figure 2, each member 50 comprises a motorized shaft 51 coupled to the case 48 in a rotatable manner about a fixed axis 52 parallel to the path P and in an axially fixed position.

Each blade member 50 then comprises a cylindrical portion 53, which surrounds the shaft 51 and is firmly connected to the shaft 51. Each blade member 50 finally comprises a plurality of longitudinal blades 54, which radially extend from the outer periphery of the portion 53, to which they are firmly connected in positions angularly equally spaced from each other.

In particular, the cylindrical portion 53 and the blades 54 have a length measured parallel to the path P which is smaller than the maximum dimension of the molds 2 measured in the same direction. In this manner, one single mold 2 at a time is picked up by the blade member 50.

Again with reference to Figure 2, the blades 54 extend inside a relative interruption recess 55 of the guides 10 and of the relative supporting surface 11. Each recess 55 has a dimension or length measured parallel to the path P approximating by excess the length of the blades 54 in the same direction and anyway generally, but not necessarily, smaller than the length of the side portions 2A of the molds 2 measured parallel to the path P, since preferably the molds 2 are supported also by the surfaces 42 during the thrust exerted by the fingers 40. Each recess 55 then has a dimension measured orthogonally to the path P which is constant along the entire path P and is such that, when the portion 2A overlaps the recess 55, it is possible to act directly from the bottom on the relative portion 2A, in particular on the bottom longitudinal edge of the relative portion 2A.

To such purpose, each of the blades 54 has a radial dimension such to engage with clearance the relative recess 55 and to have a terminal portion 54A thereof arranged below the relative supporting surface 11, as visible in Figure 5.

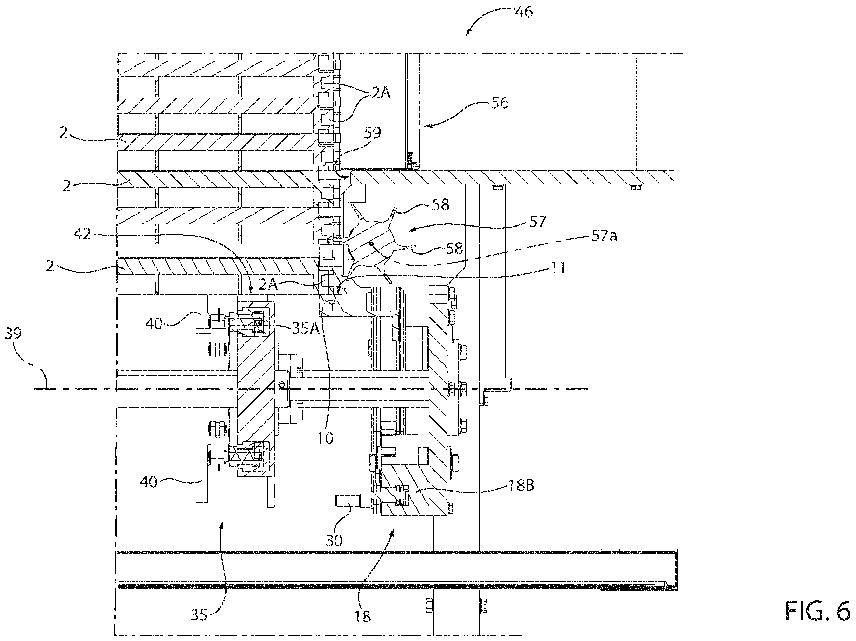

Still with reference to Figure 3 and, in particular, to Figure 6, each unit 46 is conceptually and constructively similar to the unit 45 and it too comprises a vertical mold storage 56 housing a stack of molds 2 placed on top of each other and a blade member 57, which has dimensions and a functionality different from that of the member 50. In particular, the member 57 is motorized, angularly controlled and configured to hold the stack of molds inside the storage 56 (in particular without ratchet devices) and to accompany and transfer in succession the molds 2 housed in the storage 56 on the underlying supporting surfaces 11. The supporting surfaces 11 have no interruptions or recesses at or below the members 57.

More specifically, each member 57 is rotatable about an axis (57A) parallel to the axis 52, has a length conveniently, but not necessarily, equal to that of the members 50, and comprises a plurality of blades 58, conceptually different from the blades 54 due to the fact of carrying out functions which are different and in greater number than that of the blades 54.

Each blade 58 has a radial dimension such to partially engage the outlet 59 of the storage 56 so as to hold the molds 2 inside the storage 56 and always act on a bottom surface of the relative side portion 2A for accompanying the mold 2 during the advancement thereof by fall on the guides 11 and release it when placed on the guides 11. To this purpose, the blades 58 have respective free ends suitable to be arranged always above the relative surface 11, as visible in Figure 6.

In the described plant 1, the replacement of the molds 2 occurs in the following way.

For the sake of simplicity, it is supposed that only one of the molds 2 has to be replaced. When such mold 2 enters the replacement station 8 sliding above the surfaces 11 and 42, it is completely free from the constraint with the catenary 12 and it is advanced through the station 8 only by the fingers 40 of the conveyors 35 which cause the correct positioning thereof along the path P. When the mold 2 is below and at the inlet 49 of the storage 48, as visible in Figure 5, a blade 54 engaging the relative recess 55 is arranged with the terminal portion 54A thereof below the relative surface 11. Following the rotation of the blade member 50 about the axis 52, the portion 54A progressively pushes from the bottom on the bottom longitudinal edge of the relative portion 2A progressively lifting the mold 2 until inserting it inside the storage 48 through the inlet 49.

At this point, the space left empty by the removed mold 2 advances in the station 8 until arriving below the outlet 59 of the storage 56. At this point, each blade member 57 during the rotation thereof outputs a mold 2 through the outlet and, holding the others, accompanies it in its descent by gravity until it is placed on the supporting surfaces 11 and 42, as illustrated in Figure 6.

The space at disposal for arranging the mold 2 on the supporting surfaces 11 and 42, by means of the accompanying carried out by the members 57 in the specific case illustrated, is defined by the distance between two pairs of successive fingers 40 along the path P.

The pair of fingers 40 which follows along the path P is placed against the back of the mold 2 and, at this point, advances such mold 2, in a perfectly synchronized manner with the main catenary 12, until the outlet of the station 8. At such outlet, by effect of the chains 13 that are brought again close, the stegs 30 initially (i.e. prior to the cam 29) enter from the bottom upwards into the vertical countersunk passages of the seats 31 and, then (i.e. after the cam 29), in horizontal into the blind holes of the seats 31 thanks to the chains 13 being brought again close, so as to constrain the mold 2 to the main catenary 12.

Based on the foregoing, it is apparent that, with respect to the known solutions, the plant 1 is extremely efficient and reliable, since when a mold 2 is picked up and, especially, is inserted along the path P, such mold 2 is completely free from the main catenary 12.

In particular, when a new mold 2 has to be inserted, the stegs 30 continue to be distant, in particular lowered, with respect to the supporting surfaces 11. As aforementioned, the longitudinal distance between the fingers 40 of the additional conveyor 35 along the path P allows having greater freedom in the deposit of the mold 2 on the longitudinal supporting surfaces 11, with respect to the known solutions, where the deposit had to necessarily occur at a given and precise instant, i.e. the instant when the stegs transit for allowing the stegs to enter into the vertical countersunk passages of the molds while the latter are inserted downwards in the path P and thus allowing the stegs to couple to the molds.

In fact, thanks to the fact that the distance between the fingers 40 in longitudinal direction is relatively wide, with respect to the known solutions, the instant when placing the mold 2 on the surfaces 11 can occur within a time interval or range. Consequently, it is possible to reinsert each mold 2 with a greater time tolerance, which is technically called "phase margin", being the distance between the front supporting surface of each finger 40 and the back surface of the finger which precedes it definitely greater than the dimension of the molds measured parallel to the path P. In other words, the difference between such distance and such dimension defines a clearance or tolerance with which it is possible to position the mold 2 on the surfaces 11 during the insertion in the path P in a safe and reliable manner.

Such clearance or tolerance in longitudinal direction is then recovered by the additional conveyor 35, when the pair of fingers 40 which follow the deposited mold 2 are placed against the back of the latter.

In fact, it is apparent that should the inserted/deposited mold 2 not be exactly in the expected position, immediately after the placing on the surfaces 11 it is repositioned by the additional conveyor 35 and brought into the expected position for the correct following insertion of the stegs 30.

Each mold deposited on the surfaces 11 is then advanced by the additional conveyor 35 only with no interference with the stegs 30, until the catenaries 12 are brought again close. By effect of the synchronism between the conveyor 35 and the catenary 12 and by effect of the countersink of the aforementioned vertical passages of the seats 31, the stegs 30 fluidly enter with no obstacles into the seats 31, to then engage the blind holes of the latter.

Based on the foregoing, it is further apparent that the plant 1 is extremely simplified, since the blade members 50 carry out the double function of gripping and first lifting of the molds 2 from the sliding surfaces 11, passing through the recesses 55 or the interruptions provided in the guides 10 and in the supporting surfaces 11 and also the further function of lifting and inserting the molds inside the storage 48. The positioning of the members 50 and of the inlet of the storage 48 allow preventing the use of crank gears or other accessory devices of first lifting. In other words, only the members 50 are used for the lifting. This results in a simplification of the plant.

In fact, it is immediately noticeable that each steg 54 picks up and lifts the relative mold 2 rotating in contact with the relative edge B of the portion 2A without ever decoupling from the mold 2 to be replaced.

Analogous considerations are valid for the blade members 57, since each of them alone feeds a mold 2 into each space left empty by the mold 2 picked up, simplifying the plant 1 and reducing both manufacturing and functional costs thereof.

Lastly, the lowering of the intermediate section 18B of the chains 13 frees a space in which the members 50 and 57 can operate easily regardless of their shape, dimensions or geometry and containing the bulk in width of the plant at the station 8.

Based on the foregoing, it is apparent that modifications and variants can be made to the described plant 1 without thereby departing from the scope of protection defined by the independent claims.

In particular, the blade members 50, 57 could be shaped or replaced with other multifunction members, the recesses 55 could extend only partially through the supporting surfaces 11 which in this manner would still continue to ensure a support for the mold 2 to be picked up.

## Claims

1. Mold advancement method, particularly for forming confectionery products, the method comprising the steps of advancing an ordered succession (7) of molds along a longitudinal advancement path (P) on a pair of longitudinal horizontal supporting surfaces (11) transversely spaced from each other by advancing each mold by drag pins (30) forming part of a main drag catenary (12) and coupled to said molds, of moving said ordered succession (7) through a mold replacement station (8) arranged along said path (P) and of at least partially decoupling said drag pins from the molds so that the molds can be lifted from said supporting surfaces (11); inside said mold replacement station (8), the method comprising the further steps of lifting at least one mold to be replaced from said supporting surfaces and arranging the lifted mold in a mold storage (47) and inserting a further mold in place of the previously lifted mold before progressively re-coupling said molds to said main drag catenary (12), wherein
inside said replacement station (8) said drag pins (30) are completely decoupled from said molds arranged on said supporting surfaces (11) and wherein the advancement of said molds through said mold replacement station (8) is carried out using an additional thrust conveyor (35) synchronized with said main drag catenary and configured to push each said mold along said path and to leave each mold after the re-coupling of said drag pins (30) to said mold (2).

2. Method according to claim 1, **characterized in that** the complete decoupling of said drag pins (30) from said mold is carried out by lowering said drag pins (30) below said respective supporting surfaces (11).

3. Method according to claim 1 or 2, **characterized in that** at least inside said mold replacement station the molds are placed and advanced on an additional supporting surface (42) carried by said additional conveyor.

4. Method according to any of the above claims, **characterized in that** the lifting of said mold to be replaced from said supporting surfaces (11) to the mold storage (47) is carried out by using, for each said supporting surface (11), a single gripping and lifting member (50) and by passing gripping portions (54) of said gripping and lifting member through recesses (55) or interruptions of said relative supporting surface (11).

5. Mold advancement plant (1) for the advancement of molds, particularly for the forming of confectionery products; the plant comprising a pair of surfaces (11) for supporting and sliding an ordered succession (7) of molds and arranged on opposite longitudinal sides of a longitudinal advancement path (P) of said ordered succession; a main drag catenary (12); drag pins (30) of said main drag catenary each suitable for engaging a relative retention seat obtained in a terminal portion of a relative said mold; a mold replacement station (8) of at least one mold to be replaced of said ordered succession (7) of molds and arranged along said longitudinal path (P) and crossed by said succession of molds; decoupling means (19) to partially decouple said drag pins from said retention seats; a mold storage (45) for storing the molds; lifting means to lift at least one mold to be replaced from said supporting surfaces and introduce the lifted mold into said mold storage; and inserting means for inserting a further mold into the space left empty by the mold lifted by said lifting means; wherein in said mold replacement station said decoupling means comprise extractor means configured to completely decouple said drag pins from said retention seats when the molds are arranged on said supporting surfaces and **wherein the plant comprises**, moreover, in said replacement station, an additional thrust conveyor synchronized with said main drag catenary and comprising, for each said mold, at least one pushing device configured to push each said mold along said path and to leave each mold after the re-coupling of the drag pins (30) to the mold.

6. Plant according to claim 5, **characterized in that** said additional conveyor comprises, in said replacement station and for each said mold, a pair of pushing fingers protruding upwards above said supporting surfaces and against which the mold is arranged in abutment.

7. Plant according to claim 5 or 6, **characterized in that** said extractor means comprise handling means to lower said drag pins (30) below said respective supporting surfaces.

8. Plant according to one of claims from 5 to 7, **characterized in that** it comprises, in addition, at least one additional supporting surface for said molds arranged inside said replacement station and carried by said additional conveyor.

9. Plant according to any of claims from 5 to 8, **characterized in that** said lifting means comprise, for each said supporting surface, a single motorized gripping and lifting member (50) and **in that** each said supporting surface (11) has a respective passage or interruption configured to be crossed by at least one gripping portion (54) of said respective gripping and lifting member (50).

10. Plant according to claim 9, **characterized in that** said motorized gripping member (50) is rotatable about a fixed hinged axis (52) parallel to said path.

## Patentansprüche

1. Formvorschubverfahren, insbesondere zur Formgebung von Süßwarenerzeugnissen, wobei das Verfahren die Schritte aufweist: Vorschieben einer geordneten Abfolge (7) von Formen entlang eines Längsvorschubwegs (P) auf einem Paar waagerechten Längsauflageflächen (11), die voneinander quer beabstandet sind, durch Vorschieben jeder Form durch Schleppstifte (30), die Teil einer Hauptschleppkettenlinie (12) bilden und mit den Formen gekoppelt sind, Bewegen der geordneten Abfolge (7) durch eine Formaustauschstation (8) hindurch, die entlang des Wegs (P) angeordnet ist, und zumindest teilweises Entkoppeln der Schleppstifte von den Formen, so dass die Formen von den Auflageflächen (11) abgehoben werden können; wobei innerhalb der Formaustauschstation (8) das Verfahren ferner die Schritte aufweist: Abheben mindestens einer auszutauschenden Form von den Auflageflächen und Anordnen der abgehobenen Form in einem Formlager (47) sowie Einsetzen einer weiteren Form anstelle der zuvor abgehobenen Form vor fortlaufendem erneutem Koppeln der Formen mit der Hauptschleppkettenlinie (12), wobei innerhalb der Formaustauschstation (8) die Schleppstifte (30) von den auf den Auflageflächen (11) angeordneten Formen vollständig entkoppelt werden und wobei der Vorschub der Formen durch die Formaustauschstation (8) hindurch mit Hilfe eines zusätzlichen Schubförderers (35) durchgeführt wird, der mit der Hauptschleppkettenlinie (12) synchronisiert und so konfiguriert ist, dass er jede Form entlang des Wegs schiebt und jede Form nach dem erneuten Koppeln der Schleppstifte (30) mit der Form (2) zurücklässt.

2. Verfahren nach Anspruch 1, **dadurch gekennzeichnet, dass** das vollständige Entkoppeln der Schleppstifte (30) von der Form durchgeführt wird, indem die Schleppstifte (30) unter die jeweiligen Auflageflächen (11) abgesenkt werden.

3. Verfahren nach Anspruch 1 oder 2, **dadurch gekennzeichnet, dass** mindestens innerhalb der Formaustauschstation die Formen auf einer zusätzlichen Auflagefläche (42) platziert und vorgeschoben werden, die durch den zusätzlichen Förderer mitgeführt wird.

4. Verfahren nach einem der vorstehenden Ansprüche, **dadurch gekennzeichnet, dass** das Abheben der auszutauschenden Form von den Auflageflächen in das Formlager (47) durchgeführt wird, indem für jede Auflagefläche (11) ein einzelnes Greif- und Hebeteil (50) verwendet wird und indem Greifabschnitte (54) des Greif- und Hebeteils durch Aussparungen (55) oder Unterbrechungen der relativen Auflagefläche (11) hindurch geführt werden.

5. Formvorschubanlage (1) zum Vorschub von Formen, insbesondere zur Formgebung von Süßwarenerzeugnissen; wobei die Anlage aufweist: ein Paar Flächen (11) zum Auflegen und Verschieben einer geordneten Abfolge (7) von Formen, die auf entgegengesetzten Längsseiten eines Längsvorschubwegs (P) der geordneten Abfolge angeordnet sind; eine Hauptschleppkettenlinie (12); Schleppstifte (30) der Hauptschleppkettenlinie, die jeweils zum Eingreifen in einen relativen Haltesitz geeignet sind, der in einem Endabschnitt einer relativen Form erhalten ist; eine Formaustauschstation (8) mindestens einer auszutauschenden Form der geordneten Abfolge (7) von Formen, die entlang des Längswegs (P) angeordnet ist und von der Abfolge von Formen durchquert wird; eine Entkopplungseinrichtung (19), um die Schleppstifte aus den Haltesitzen teilweise zu entkoppeln; ein Formlager (45) zum Lagern der Formen; eine Hebeeinrichtung, um mindestens eine auszutauschende Form von den Auflageflächen abzuheben und die abgehobene Form in das Formlager einzuführen; und eine Einsetzeinrichtung zum Einsetzen einer weiteren Form in den Raum, der durch die abgehobene Form leer bleibt, die durch die Hebceinrichtung abgehoben wird; wobei
in der Formaustauschstation die Entkopplungseinrichtung eine Auszieheinrichtung aufweist, die so konfiguriert ist, dass sie die Schleppstifte aus den Haltesitzen vollständig entkoppelt, wenn die Formen auf den Auflageflächen angeordnet sind, und wobei die Anlage in der Formaustauschstation ferner einen zusätzlichen Schubförderer aufweist, der mit der Hauptschleppkettenlinie synchronisiert ist und für jede Form mindestens eine Schubvorrichtung aufweist, die so konfiguriert ist, dass sie jede Form entlang des Wegs schiebt und jede Form nach dem erneuten Koppeln der Schleppstifte (30) mit der Form zurücklässt.

6. Anlage nach Anspruch 5, **dadurch gekennzeichnet, dass** der zusätzliche Förderer in der Austauschstation und für jede Form ein Paar Schubfinger aufweist, die über den Auflageflächen nach oben vorstehen und an denen die Form anliegend angeordnet ist.

7. Anlage nach Anspruch 5 oder 6, **dadurch gekennzeichnet, dass** die Auszieheinrichtung eine Handhabungseinrichtung aufweist, um die Schleppstifte (30) unter die jeweiligen Auflageflächen abzusenken.

8. Anlage nach einem der Ansprüche 5 bis 7, **dadurch gekennzeichnet, dass** sie ferner mindestens eine zusätzliche Auflagefläche für die Formen aufweist, die innerhalb der Austauschstation angeordnet sind und durch den zusätzlichen Förderer mitgeführt werden.

9. Anlage nach einem der Ansprüche 5 bis 8, **dadurch gekennzeichnet, dass** die Hebeeinrichtung für jede Auflagefläche ein einzelnes motorisiertes Greif- und Hebeteil (50) aufweist, und dadurch, dass jede Auflagefläche (11) einen jeweiligen Durchgang oder eine jeweilige Unterbrechung hat, der (die) so konfiguriert ist, dass er (sie) von mindestens einem Greifabschnitt (54) des jeweiligen Greif- und Hebeteils (50) durchquert wird.

10. Anlage nach Anspruch 9, **dadurch gekennzeichnet, dass** das motorisierte Greifteil (50) um eine feste Gelenkachse (52) parallel zum Weg drehbar ist.

## Revendications

1. Procédé d'avancement de moules, en particulier pour former des produits de confiserie, comprenant les étapes consistant à faire avancer une suite ordonnée (7) de moules le long d'une trajectoire d'avancement longitudinal (P) sur une paire de surfaces d'appui horizontales et longitudinales (11) espacées transversalement l'une de l'autre en faisant avancer chaque moule à l'aide de goupilles d'entraînement (30) faisant partie d'une caténaire à entrainement principale (12) et couplées auxdits moules, à déplacer ladite suite ordonnée (7) à travers une station de remplacement des moules (8) disposée le long de ladite trajectoire (P) et à découpler au moins partiellement lesdites goupilles d'entraînement des moules de manière à ce que les moules puissent être soulevés des surfaces d'appui (11) ; à l'intérieur de ladite station de remplacement des moules (8), le procédé comprend les étapes supplémentaires consistant à soulever au moins un moule devant être remplacé desdites surfaces d'appui et à disposer le moule soulevé dans un espace de stockage destiné aux moules (47) et à insérer un autre moule à la place du moule précédemment soulevé avant de coupler de nouveau progressivement lesdits moules à ladite caténaire à entrainement principale (12),
dans lequel à l'intérieur de ladite station de remplacement (8), les goupilles d'entraînement (30) sont complètement découplées desdits moules disposés sur lesdites surfaces d'appui (11) et dans lequel l'avancement desdits moules à travers ladite station de remplacement des moules (8) est effectué à l'aide d'un convoyeur avec un système de poussée supplémentaire (35) synchronisé à ladite caténaire à entrainement principale et configuré pour pousser chaque dit moule le long de ladite trajectoire et pour laisser chaque moule après le re-accouplage desdites goupilles d'entraînement (30) audit moule (2).

2. Procédé selon la revendication 1, **caractérisé en ce que** le découplage complet desdites goupilles d'entraînement (30) dudit moule est effectué en abaissant lesdites goupilles d'entraînement (30) sous lesdites surfaces d'appui respectives (11).

3. Procédé selon la revendication 1 ou 2, **caractérisé en ce qu'**au moins à l'intérieur de ladite station de remplacement de moules, les moules sont placés et avancés sur une surface d'appui supplémentaire (42) transportée par ledit convoyeur supplémentaire.

4. Procédé selon l'une quelconque des revendications précédentes, **caractérisé en ce que** le levage dudit moule devant être remplacé depuis lesdites surfaces d'appui (11) jusqu'à l'espace de stockage des moules (47) est effectué en utilisant, pour chacune desdites surfaces d'appui (11), un unique élément de préhension et de levage (50) et en faisant passer des zones de préhension (54) dudit élément de préhension et de levage à travers des cavités (55) ou des interruptions de ladite surface d'appui relative (11).

5. Installation d'avancement de moules (1) destinée à l'avancement de moules, en particulier destinée à la fabrication de produits de confiserie ; l'installation comprenant une paire de surfaces (11) pour supporter et faire coulisser une suite ordonnée (7) de moules et disposées sur des côtés longitudinaux opposés d'une trajectoire d'avancement longitudinal (P) de ladite suite ordonnée ; une caténaire d'entraînement principale (12) ; des goupilles d'entraînement (30) de ladite caténaire d'entraînement principale, chacune étant destinée à s'engager dans un siège de retenue relatif obtenu dans une partie terminale d'un dit moule relatif ; une station de remplacement de moules (8) d'au moins un moule devant être remplacé de ladite suite ordonnée (7) de moules et disposée le long de ladite trajectoire longitudinale (P) et traversée par ladite succession de moules ; des dispositifs de découplage (19) permettant de découpler partiellement lesdites goupilles d'entraînement desdits sièges de retenue ; un espace de stockage des moules (45) permettant de stocker les moules ; des dispositifs de levage permettant de soulever au moins un moule devant être remplacé desdites surfaces d'appui et introduire le moule soulevé dans ledit espace de stockage des moules ; et des dispositifs d'insertion permettant d'insérer un moule supplémentaire dans l'espace laissé vide par le moule soulevé à l'aide desdits dispositifs de levage ; dans lequel dans ladite station de remplacement des moules, lesdits dispositifs de découplage comprennent des dispositifs d'extraction configurés pour découpler complètement lesdites goupilles d'entraînement des sièges de retenue lorsque les moules sont disposés sur lesdites surfaces d'appui,
et dans laquelle l'installation comprend, en outre, dans ladite station de remplacement, un convoyeur à système de poussée supplémentaire synchronisé à ladite caténaire à entrainement principale et comprenant, pour chaque dit moule, au moins un dispositif de poussée configuré pour pousser chaque dit moule le long de ladite trajectoire et pour laisser chaque moule après le ré-accouplage des goupilles d'entraînement (30) au moule.

6. Installation selon la revendication 5, **caractérisée en ce que** ledit convoyeur supplémentaire comprend, dans ladite station de remplacement et pour chaque dit moule, une paire de doigts pousseurs faisant saillie vers le haut au-dessus desdites surfaces d'appui et contre lesquels le moule est disposé en butée.

7. Installation selon la revendication 5 ou 6, **caractérisée en ce que** lesdits dispositifs d'extraction comprennent des dispositifs de manipulation permettant d'abaisser lesdites goupilles d'entraînement (30) au-dessous desdites surfaces d'appui respectives.

8. Installation selon l'une quelconque des revendications 5 à 7, **caractérisée en ce qu'**elle comprend, en outre, au moins une surface d'appui supplémentaire pour lesdits moules disposés à l'intérieur de ladite station de remplacement et transportés au moyen dudit convoyeur supplémentaire.

9. Installation selon l'une quelconque des revendications de 5 à 8, **caractérisée en ce que** lesdits moyens de levage comprennent, pour chaque surface d'appui, un unique élément de préhension et de levage motorisé (50) et **en ce que** chaque surface d'appui (11) présente une zone de passage ou d'interruption respective configurée pour être traversée par au moins une partie de préhension (54) dudit élément de préhension et de levage respectif (50).

10. Installation selon la revendication 9, **caractérisée en ce que** ledit élément de préhension motorisé (50) peut être mis en rotation autour d'un axe articulé fixe (52) parallèle à ladite trajectoire.
